# EUROPÄISCHE PATENTSCHRIFT

(11) **EP 1 241 397 B1**
(45) Veröffentlichungstag und Bekanntmachung des Hinweises auf die Patenterteilung: **09.08.2006**
(21) Anmeldenummer: 02076030.2
(22) Anmeldetag: 14.03.2002
(51) Int. Cl.: F16M 13/02

(54) **Tragbügel für tragbare Geräte, insbesondere für medizinische Geräte**
Mounting bracket for portable apparatus, especially for medical apparatus
Dispositif de support pour appareils portables, en particulier pour appareils médicaux

(30) Priorität: 16.03.2001 IT BZ010013
(43) Veröffentlichungstag der Anmeldung: 18.09.2002
(73) Patentinhaber: Boscarol Production S.r.l., 39100 Bolzano (IT)
(72) Erfinder: Boscarol, Oscar, 39100 Bolzano (IT); Brazzo, Daniele, 39100 Bolzano (IT)
(74) Vertreter: Faraggiana, Vittorio

(56) Entgegenhaltungen:
- EP-A- 0 608 485
- DE-U- 8 901 019
- DE-U- 8 913 456
- US-A- 3 749 349

## Beschreibung

Die vorliegende Erfindung bezieht sich auf einen Tragbügel für tragbare Geräte, insbesondere für medizinische Geräte nach dem Oberbegriff des Anspruchs 1.

Es ist das Problem bekannt, Geräte oder Gegenstände an einer Wand aufzuhängen und den Gegenstand wiederholt abzunehmen und wieder anzubringen. Es ist überdies das Problem bekannt, Gegenstände oder Geräte an Wänden von sich in Bewegung befindlichen Fahrzeugen aufzuhängen, die Erschütterungen ausgesetzt sind, wo daher die Befestigung selbst durch die Erschütterungen gefährdet ist.

Dieses Problem ist von vorrangiger Bedeutung bei medizinischen Geräten, da eine sichere Befestigung für die Unversehrtheit eines Patienten ständig sichergestellt sein und überdies gewährleistet werden muss, dass das Gerät rasch und leicht angebracht und wieder abgenommen werden kann. Die Vorgänge bei der Anbringung und der Abnahme müssen überdies derart sein, dass sie möglichst auch mit einer einzigen Hand durchgeführt werden können.

In der Veröffentlichung DE 89 13 456 U (GOTTBEHÜT) (D2) wird eine Konsole für einen plattenförmigen Heizkörper, mit einer Schiene beschrieben, die einen oberen und einen unteren Halter für den Heizkörper trägt, wobei die Schiene einen Quersteg sowie von dessen Längskanten nach hinten abgewinkelte Querschenkel und eine zwischen den Querschenkeln angeordnete Längsführung für den oberen Halter auf weist, der mit einem Führungssteg in die Längsführung einfasst und darin zwischen einer Bereitschaftsstellung und einer gegenüber letzterer eingeschobenen Haltestellung verschiebbar und durch eine Feder in die Haltestellung beaufschlagt ist, und wobei der Führungssteg auf seiner dem Quersteg zugewandten Seite eine Arretierungskante auf weist, die in der Bereitschaftsstellung eine Gegenarretierungskante am Quersteg hintergreift und den Halter gegen ein Einschieben arretiert.

Die Arretierungskante ist durch einen Vorsprung gebildete, der auf der dem Quersteg zugewandten Seite des Führungsstegs angeordnet ist, und von der Arretierungskante in Ausschubsrichtung versetzt auf der dem Quersteg zugewandten Seite des Führungsstegs ist eine ebenfalls durch einen Vorsprung gebildete Verriegelungskante angeordnet, die in der Haltestellung des Halters eine Gegenverriegelungskante am Quersteg hintergreift, die durch einen Ausschnitt im Quersteg gebildet ist, in den der die Verriegelungskante aufweisende Vorsprung bei seiner Verschiebung in die Einschubrichtung einschnappt.

Eine derartige Konsole ist nur für Körper bzw. Heizköper geeignet, die an ihren oberem und unterem Ende zueinander parallele Halterungskanten aufweisen, wobei die obere Halterung durch Einschnappen eines Vorsprunges mit der Verriegelungskante festgelegt wird. Eine solche Konsole ist für ein oft zu wiederholendes und rasches Anbringen von Geräten nicht geeignet, da die obere Halterung für das Einschnappen in eine Verriegelungsposition gebracht werden muss, die durch einen Ausschnitt im Quersteg festgelegt ist. Überdies müssen bei der Montage beide Hände verwendet werden, um den Heizkörper in die Befestigungsposition bringen zu können.

Die Aufgabe der vorliegenden Erfindung liegt daher darin, das Problem der Befestigung eines Gegenstandes an einer Wand zu lösen, wobei vor allem verhindert werden soll, dass die Anbringung eines Gerätes verhindert wird, wenn die Befestigung nicht sichergestellt ist, das Aufhängen beispielsweise eines medizinischen Gerätes mit wenigen Handgriffen erlaubt und überdies das Gerät bereitstellt, mit elektrischem Strom sofort verbunden zu werden, sobald das Gerät in eine stabile Position gebracht wird.

Diese und weitere Aufgaben werden durch einen Tragbügel mit den Merkmalen des kennzeichnenden Teils des Anspruchs 1 gelöst.

Erfindungsgemäß wird ein Tragbügel vorgeschlagen, der mit einem zu befestigenden deckelförmigen Teil versehen ist, dessen zwei vertikale Rippen in Gebrauchsstellung einen Abstand der Wand des Deckels von einer Wand sicherstellen, an welcher der Bügel angebracht wird, und unter Umbiegen aus zwei Fenstern der Deckelwand der von der Deckelwand beabstandeten Flanschen, kann zwischen den von der Deckelwand beabstandeten Flanschen und der Wand selbst ein beweglicher Einsatz gleitbar geführt werden, der wechselweise die Flanschen des ersten oder die Flanschen des zweiten Fensters in Positionen abdecken, in denen die Schraubenköpfe abgedeckt sind, die die Flanschen an der Wand befestigen, wo der Tragbügel aufgehängt wird. So überschneiden sich bei einer nicht einwandfreien Position der Schrauben, die Schrauben mit der Bewegung des beweglichen Einsatzes und erlauben somit nicht seine Verstellung und daher nicht das Anbringen oder das Einhaken des aufzuhängenden Gegenstandes.

Wird der Einsatz mit den Einhakfunktionen des Gerätes am Tragbügel versehen, kann dieses Einhaken nur unter Verstellung des Einsatzes und daher nur mit den befestigten Schrauben in der einwandfreien Position erfolgen.

In einer bevorzugten Ausführungsform ist vom unteren Rand der Deckelwand ein Stützkanal umgebogen, um einen entsprechenden Rand eines Gegenstandes aufzunehmen und vom oberen Rand der Deckelwand ist eine Nase abgebogen, die zusammen mit dem unteren Kanal den auf der Wand aufliegenden Gegenstand unter gleichzeitigem Einhaken des beweglichen Einsatzes mittels eines Hakens umgreift, der in eine Hinterschneidung des aufzuhängenden Gegenstandes gebracht wird.

Um den Haken des Einsatzes in der Hinterschneidung des Gegenstandes einschnappen zu lassen, wird der Einsatz selbst in Richtung der Nase federbelastet und der Haken wird zusammen mit dem Einsatz verstellt, indem der Gegenstand am Kanal in Richtung der Nase auf der Deckelwand verschwenkt wird.

Um bequem auf den Einsatz einwirken zu können, verlängert sich dieser oben in einem Abschnitt, der mit elastischer Spannung einer Feder zu pressen ist, um den Haken vom Gegenstand zu befreien und den Gegenstand um den Stützkanal zu dessen Freigabe vom Bügel zu verschwenken.

Zweckmäßiger Weise ist in der Wand des Deckels ein Durchgang vorgesehen, der als Aufnahme eines elektrischen Kontaktes für den Anschluss eines beispielsweise medizinischen Gerätes für elektrischen Strom dient.

Weitere Merkmale und Vorteile gehen aus den weiteren Ansprüchen und der folgenden Beschreibung einer bevorzugten, in den Figuren der beigefügten Zeichnung dargestellten Ausführungsform hervor. Es zeigen,
- Figur 1: einen erfindungsgemäßen, schaubildlich dargestellten Tragbügel,
- Figur 2: schaubildlich einen Deckel des Bügels aus Figur 1,
- Figur 3: schaubildlich eine Feder des Bügels nach Figur 1,
- Figur 4: schaubildlich einen Einsatz des Bügels aus Figur 1, und
- Figur 5: schaubildlich eine Kappe für den Tragbügel aus Figur 1.

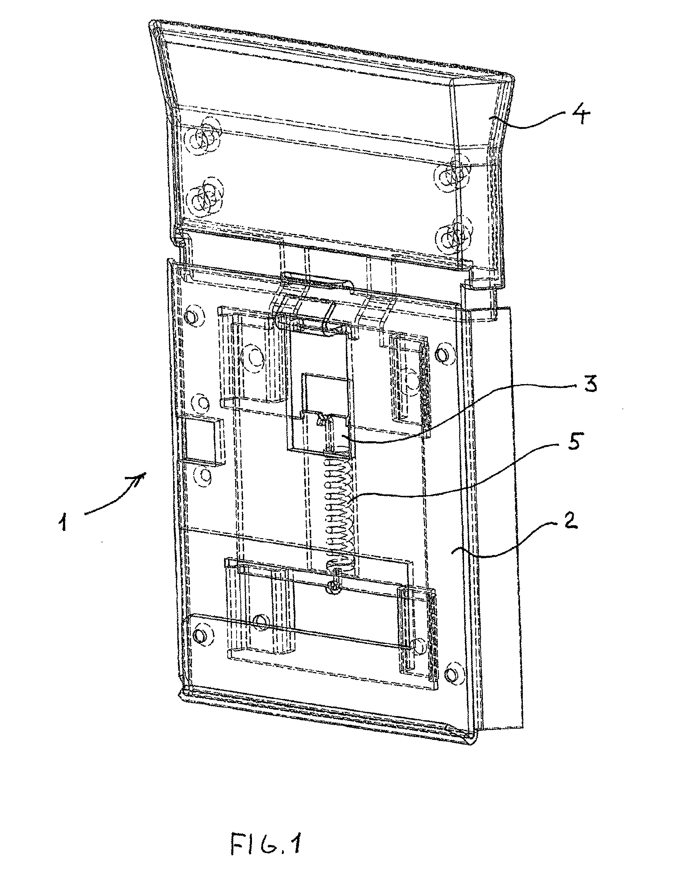

In der Figur 1 ist mit der Bezugsziffer 1 insgesamt ein erfindungsgemäßer Tragbügel angegeben, der beispielsweise für medizinische Geräte bereitgestellt ist.

Der Tragbügel 1 umfasst einen Deckel 2, einen beweglichen Einsatz 3, eine oberhalb des beweglichen Einsatzes 3 angebrachte als zweiter Deckel ausgebildete Druckkappe 4, und eine zwischen Deckel 2 und beweglichen Einsatz 3 gespannte Feder 5.

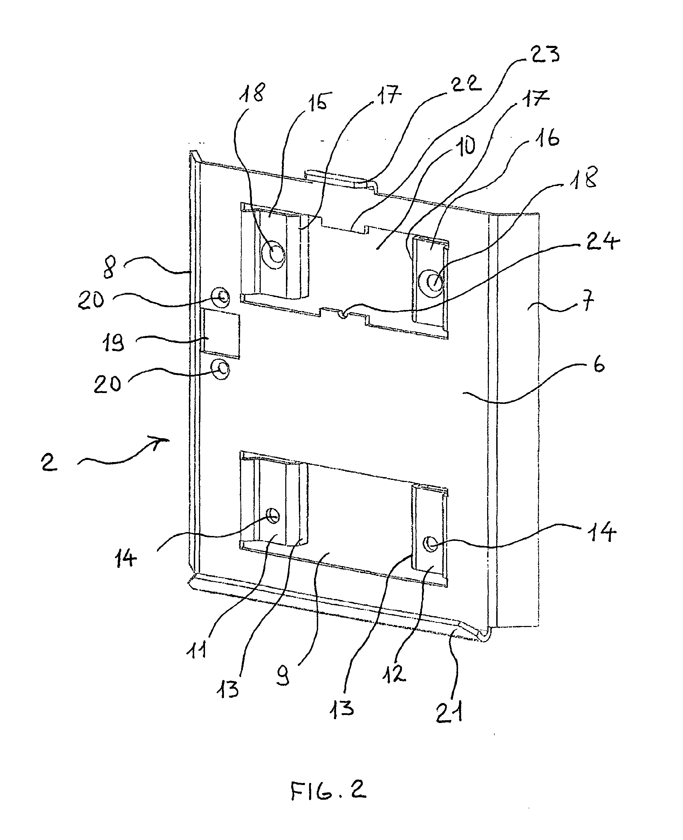

Wie in Figur 2 angegeben, weist der Deckel 2 eine Stirnwand 6 auf, von dessen vertikalen Seitenrändern, in Benutzungsstellung gesehen, Rippen 7 und 8 abgebogen sind, deren freien Enden dazu bestimmt sind, auf eine Wand derart aufzuliegen, dass die Stirnwand 6 von der Wand parallel beabstandet ist.

Aus der Stirnwand 6 sind ein unteres Fenster 9 und ein oberes Fenster 10 ausgenommen.

Von den vertikalen Seitenrändern des Fensters 9 ist jeweils ein Flansch 11 und 12 herausgebogen, die in einer gemeinsamen zur Ebene der Stirnwand 6 parallelen Ebene liegen und mit einer Lasche 13 versehen sind, der mit seinem freien Ende an der für die Montage vorgesehenen Wand aufliegt. In jedem Flansch 11 und 12 ist eine Befestigungsbohrung 14 ausgenommen.

Auf dieselbe Art und Weise und mit denselben Funktionen wie das untere Fenster 9, ist aus dem oberen Fenster 10 jeweils ein Flansch 15 und 16 mit Lasche 17 und Befestigungsbohrung 18 herausgebogen.

In der Stirnwand 6 ist überdies ein Durchgang 19 ausgenommen, der die Aufnahme für ein nicht gezeigtes Kontaktelement zur Speisung von elektrischem Strom an das Gerät bildet. Das Kontaktelement kann zweckmäßiger Weise mittels von nicht gezeigten Schrauben befestigt werden, die in Befestigungsbohrungen eingreifen, die in der Wand 6 ausgenommen sind.

Vom unteren Rand der Stirnwand 6 ist auskragend nach außen ein Stützkanal 21 ausgebildet, der einen Rand des anzubringenden Gerätes aufliegend derart aufnimmt, dass er in Richtung der Stirnwand verschwenkt werden kann, bis er mit derselben in Berührung kommt, um einen oberen Rand des Gerätes von einer oberen, aus der Wand 6 vorspringenden Nase 22 umgreifen zu lassen.

Im oberen Fenster 10 steht überdies vom oberen Rand ein in der Ebene des Deckels 2 angeordneter Anschlag 23 vor.

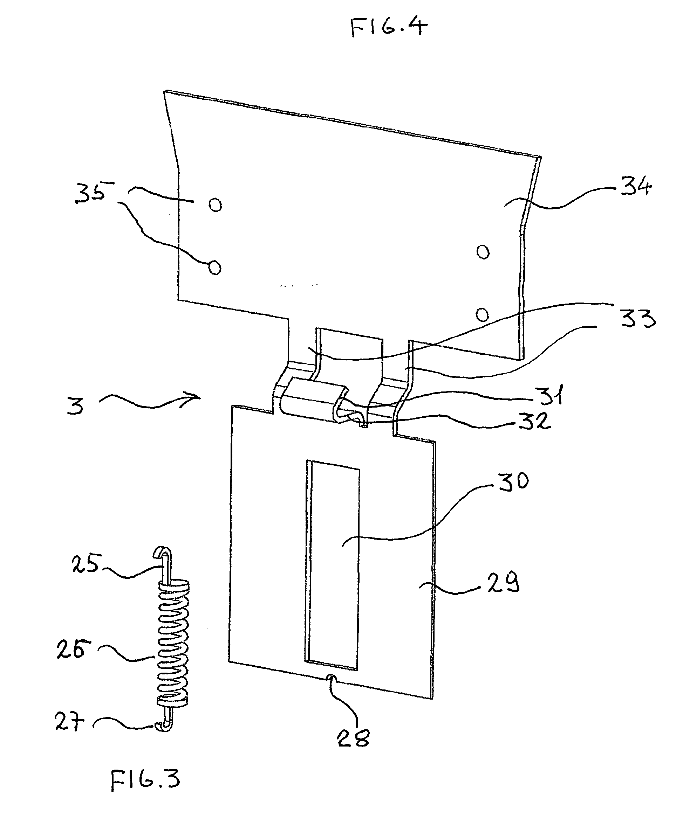

Am unteren Rand desselben Fensters 10 ist eine Einbuchtung 24 geformt, an dem ein Endhaken 25 einer Zugfeder 26 (Figur 3) angreift, deren Haken 27 des anderen Endes in einer Einbuchtung 28 des unteren Randes einer Platte 29 des beweglichen Einsatzes 3 eingreift, der vertikal zwischen der Stirnwand 6 und den Flanschen 11-12 und 15 - 16 derart verstellbar ist, dass die Feder 26 in einem Fenster 30 der Platte 29 angeordnet wird, und der Einsatz 3 von der Zugfeder 26 mit einem aus dem oberen Fenster 10 vorkragenden Haken 32 in Richtung der Nase 22 gedrückt wird. Der Haken 32 weist eine schräge Fläche 31 auf, die durch eine Hinterschneidung des aufzuhängenden Gerätes derart betätigt wird, dass der Haken 32 in der Hinterschneidung einschnappt und so das Gerät zwischen dem Haken 31 und der Nase 22 ergreift.

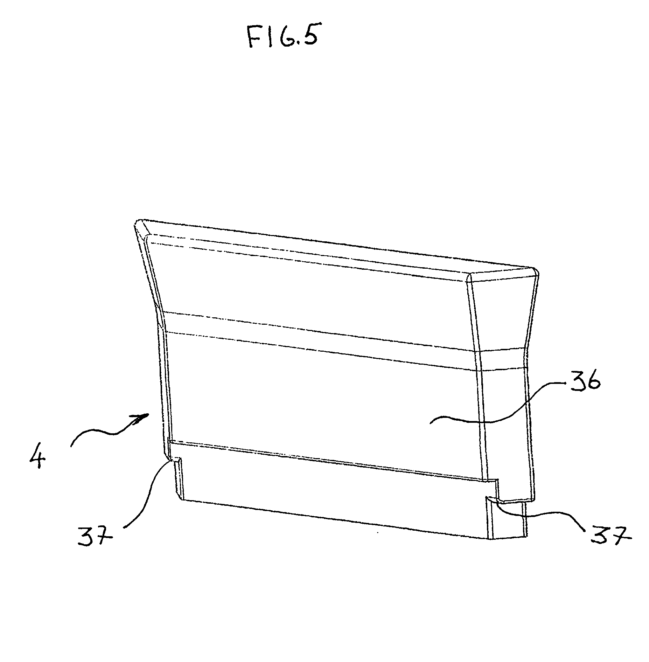

Vorteilhafterweise ist die Platte 29 oben mittels Armen 33 mit einer Tafel 34 verbunden, die mit Befestigungsbohrungen 35 für die Kappe 4 (Figur 5) versehen ist. Diese Kappe weist eine erhobene Fläche 36 im wesentlichen an derselben Höhe der Wand 6 und seitliche Ausnehmungen 37 auf, die mit den oberen Rändern der Laschen 7 und 8 in Anschlag kommen.

Die Montage eines Gegenstandes an einem erfindungsgemäßen Tragbügel kann wie folgt kurz zusammenfassend beschrieben werden:

Ein beispielsweise medizinisches Gerät wird mit seinem untern Rand am Stützkanal 21 in Auflage gebracht, der mit seinem Körper in Richtung der Wand 6 verschwenkt ist, um seine Hinterschneidung zwischen Haken 32 und Nase 22 zu zwingen und wird in seiner festen Stellung nach Verstellung des nach unten federbelasteten Einsatzes 3 zum Einschnappen gebracht, der über die Befestigungsschrauben in den Flanschen 11 und 12 gleitet, um nach dem Einschnappen nach oben zurückzukehren, wobei die Flanschen 11 und 12 befreit und die Flanschen 15 und 16 abgedeckt werden. Es ist klar, dass die Verstellung bzw. das Anbringen eines Gerätes nur möglich ist, wenn die Schrauben einwandfrei angebracht sind, da andernfalls eine Überschneidung zwischen Schrauben und Platte 29 vorliegen würde.

## Patentansprüche

1. Tragbügel für tragbare Geräte, insbesondere medizinische Geräte, umfassend:
• einen Deckel (2), der mittels Befestigungsschrauben vertikal an einer Wand befestigbar ist und wandseitig seitlich zwei vertikal verlaufende Rippen (7) aufweist,
• eine Nase (22), die an der der Wand abgewandten Seite am oberen Ende des Deckels angebracht ist,
• einen Stützkanal (21), der an der der Wand abgewandten Seite am unteren Ende des Deckels angebracht ist, wobei zwischen den Rippen und den Befestigungsschrauben ein gleitbar geführter Einsatz (3) angeordnet ist, und
• ein Federmittel (26), das den Einsatz, gegen den Deckel spannt, **dadurch gekennzeichnet,**
**dass** das Federmittel (26) den Einsatz derart gegen den Deckel (2) spannt, dass ein Haken (32), der an der der Wand abgewandten Seite des Einsatzes angeordnet ist und sich durch ein Fenster (10) des Deckels (2) erstreckt, gegen die Nase (22) des Deckels (2) gedrückt wird.

2. Tragbügel nach Anspruch 1, **dadurch gekennzeichnet, dass** der Deckel (2) zwei Fenster (9 und 10) aufweist, von denen Flansche (11, 12; 15, 16) herausgebogen sind, die von der Deckelwand beabstandet sind, wobei zwischen den von der Wand (6) des Deckels (2) beabstandeten Flanschen (11, 12; 15, 16) und der Wand (6) selbst gleitbar der bewegliche Einsatz (3) geführt ist, der wechselweise Flansche (11, 12) des ersten Fensters (9) oder die Flansche (15, 16) des zweiten Fensters (10) in Stellungen abdeckt, in denen die Köpfe von Schrauben abgedeckt werden, welche die Flanschen (11, 12; 15, 16) an der Wand befestigen, wo der Tragbügel aufgehängt wird.

3. Tragbügel nach Anspruch 1, **dadurch gekennzeichnet, dass** der Einsatz (3) sich oben in einen Abschnitt verlängert, der unter elastischer spannung des Federmittels zugfeder 26) gepresst wird, um den Haken (32) vom Gegenstand zu befreien und den Gegenstand um den Stützkanal zur Befreiung vom Bügel zu verschwenken.

4. Tragbügel nach Anspruch 1, **dadurch gekennzeichnet, dass** in der Wand (6) des Deckels (2) ein Durchtritt (19) vorgesehen ist, der die Aufnahme eines elektrischen Kontaktes für den Anschluss eines beispielsweise medizinischen Gerätes mit elektrischem Strom dient.

## Claims

1. A mounting bracket for portable apparatus, especially for medical apparatus, comprising:
- a cover (2) that can be vertically secured by means of fastening screws to a wall and has two vertical wings (7) vertically extending from the wall side,
- a projection (22) that is applied onto the side opposite to the wall at the upper end of the cover,
- a supporting groove (21) that is applied onto the side opposite to the wall at the lower end of the cover,
between the wings and the fastening screws being disposed a slidably guided movable plate (3), and
- a spring means (26) stretching the movable plate against the cover,
**characterised in that** the spring means (26) stretches the movable plate against the cover (2) so that a hook (32) that is disposed on the side of the movable plate opposite to the wall and extends through a window (10) of the cover (2), is pressed against the cover projection (22).

2. A mounting bracket as claimed in claim 1, **characterised in that** the cover (2) has two windows (9 and 10) from which flanges (11, 12; 15, 16) spaced apart from the cover wall are bent, the movable plate (3) being slidably guided between the flanges (11, 12; 15, 16) spaced apart from the wall (6) of the cover (2) and the wall (6) itself, which plate (3) is adapted to alternately cover the flanges (11, 12) of the first window (9) or the flanges (15, 16) of the second window (10) at positions where the screw heads are covered, which screw heads are adapted to fasten the flanges (11, 12; 15, 16) to the wall on which the bracket is hung.

3. A mounting bracket as claimed in claim 1, **characterised in that** the plate (3) extends upwardly into a portion adapted to be pressed through spring-tensioning of the spring means (a pulling spring 26) to release the hook (32) from the object and rotate the object about the supporting groove to free it from the bracket.

4. A mounting bracket as claimed in claim 1, **characterised in that** in the wall (6) of the cover (2) a passage (19) is provided which is used as a seat for an electric contact to connect an apparatus, a medical apparatus for example, to the mains.

## Revendications

1. Dispositif de support pour appareils portables, en particulier pour appareils médicaux, comprenant:
- un couvercle (2) pouvant être fixé verticalement par des vis de fixation à une paroi et présentant deux ailes verticales (7) s'étendant verticalement du côté de la paroi,
- un ressaut (22) qui est appliqué sur le côté opposé par rapport à la paroi à l'extrémité supérieure du couvercle,
- une rainure support (21) qui est appliquée sur le côté opposé par rapport à la paroi à l'extrémité inférieure du couvercle,
entre les ailes et les vis de fixation étant disposée une plaque insérée mobile (3) guidée de manière coulissante, et
- un moyen élastique (26) tendant la plaque insérée mobile contre le couvercle,
**caractérisé en ce que** le moyen élastique (26) tend la plaque insérée mobile contre le couvercle (2) de sorte qu'un crochet (32) qui est disposé sur le côté de la plaque mobile opposé par rapport à la paroi et qui s'étend à travers une fenêtre (10) du couvercle (2), est pressé contre le ressaut (22) du couvercle.

2. Dispositif de support selon la revendication 1, **caractérisé en ce que** le couvercle (2) présente deux fenêtres (9 et 10) à partir desquelles sont repliées des pattes (11, 12; 15, 16) espacées de la paroi du couvercle, la plaque insérée mobile (3) étant guidée de manière coulissante entre les pattes (11, 12; 15, 16) espacées de la paroi (6) du couvercle (2) et la paroi (6) elle-méme, cette plaque insérée étant apte à couvrir alternativement les pattes (11, 12) de la première fenêtre (9) ou les pattes (15, 16) de la deuxième fenêtre (10) à des positions auxquelles il y a la couverture des têtes de vis destinées à fixer les pattes (11, 12; 15, 16) à la paroi où le dispositif de support est accroché.

3. Dispositif de support selon la revendication 1, **caractérisé en ce que** la plaque insérée (3) s'étend vers le haut sur une portion destinée à être pressée donnant la tension élastique convenable au moyen élastique (ressort de traction 26) pour dégager le crochet (32) de l'objet et tourner l'objet autour de la rainure support pour le libérer du dispositif de support.

4. Dispositif de support selon la revendication 1, **caractérisé en ce qu'**on prévoit dans la paroi (6) du couvercle (2) un passage (19) utilisé en tant que logement d'un contact électrique pour brancher un appareil, par exemple un appareil médical, sur le réseau électrique.
